# FASCICULE DE BREVET EUROPEEN

(11) **EP 2 396 839 B1**
(45) Date de publication et mention de la délivrance du brevet: **21.03.2018**
(21) Numéro de dépôt: 10707094.8
(22) Date de dépôt: 12.02.2010
(51) Int. Cl.: H01M 2/16, C08L 83/00, H01M 10/052, H01M 10/056, H01M 10/054

(54) **BATTERIES NON AQUEUSES A HAUTE ENERGIE A BASE DE GELS CONDUCTEURS IONIQUES, LEUR PROCÉDÉ DE PRÉPARATION ET LEUR UTILISATION**
NICHTWÄSSRIGE HOCHENERGIEBATTERIEN MIT IONENLEITENDEN GELEN SOWIE VERFAHREN ZU IHRER HERSTELLUNG UND VERWENDUNG
HIGH-ENERGY NON-AQUEOUS BATTERIES CONTAINING ION-CONDUCTING GELS, AND METHOD FOR PREPARING AND USING SAME

(30) Priorité: 13.02.2009 FR 0950936
(43) Date de publication de la demande: 21.12.2011
(73) Titulaire: Centre National de la Recherche Scientifique, 75794 Paris Cedex 16 (FR); Université Montpellier 2 Sciences et Techniques, 34095 Montpellier Cedex 5 (FR); Université de Nantes, 44035 Nantes Cedex 1 (FR)
(72) Inventeur: LE BIDEAU, Jean, F-44300 Nantes (FR); DUCROS, Jean-Baptiste, F-38054 GRENOBLE CEDEX 9 (FR); GUYOMARD, Dominique, F-44880 Sautron (FR); SOUDAN, Patrick, F-44850 Mouzeil (FR)
(74) Mandataire: Lavoix
(86) Numéro de dépôt international: PCT/FR2010/000115
(87) Numéro de publication internationale: WO 2010/092258

(56) Documents cités:
- WO-A1-2005/007746
- WO-A2-2008/120162
- US-B1- 6 203 949
- AHMAD ET AL: "Ionogels encompassing ionic liquid with liquid like performance preferable for fast solid state electrochromic devices" ELECTROCHEMISTRY COMMUNICATION, ELSEVIER, AMSTERDAM, NL, vol. 9, no. 7, 15 juin 2007 (2007-06-15), pages 1635-1638, XP022118599 ISSN: 1388-2481
- D. AURBACH, I. WEISSMAN, A. ZABAN, P. DAN: "On the role of water contamination in rechargeable Li batteries" ELECTROCHIMICA ACTA, vol. 45, 22 novembre 1999 (1999-11-22), pages 1135-1140, XP002536711 DOI: 10.1016/S0013-4686(99)00312-6
- SIRISOPANAPORN C ET AL: "New, ionic liquid-based membranes for lithium battery application" JOURNAL OF POWER SOURCES, ELSEVIER, AMSTERDAM, NL, vol. 186, no. 2, 15 janvier 2009 (2009-01-15), pages 490-495, XP025839956 ISSN: 0378-7753 [extrait le 2008-10-21]
- KIM ET AL: "Solvent-free, PYR1ATFSI ionic liquid-based ternary polymer electrolyte systems" JOURNAL OF POWER SOURCES, ELSEVIER, AMSTERDAM, NL, vol. 171, no. 2, 8 septembre 2007 (2007-09-08), pages 861-869, XP022238097 ISSN: 0378-7753
- SALMINEN ET AL: "Physicochemical properties and toxicities of hydrophobic piperidinium and pyrrolidinium ionic liquids" FLUID PHASE EQUILIBRIA, ELSEVIER, vol. 261, no. 1-2, 19 octobre 2007 (2007-10-19), pages 421-426, XP022306846 ISSN: 0378-3812
- KAROUT A ET AL: "Silica gelation catalysis by ionic liquids" CATALYSIS COMMUNICATIONS, ELSEVIER SCIENCE, AMSTERDAM, NL, vol. 10, no. 4, 10 janvier 2009 (2009-01-10), pages 359-361, XP025691781 ISSN: 1566-7367 [extrait le 2008-08-23]

## Description

La présente invention a pour objet des batteries non aqueuses à haute énergie utilisant des gels conducteurs ioniques ou ionogels, leur procédé de préparation et leur utilisation.

Le procédé sol-gel est bien connu de l'art antérieur, simple à mettre en oeuvre, se déroule dans des conditions douces et facilite la mise en forme des matériaux (Brinker et Scherer, 1990). Classiquement le procédé sol-gel consiste en un processus d'hydrolyse et condensation qui à partir d'un précurseur moléculaire (solution vraie) conduit à la formation d'une solution colloïdale (ou sol) puis, par connexion des particules colloïdales, à la formation d'un squelette solide continu nommé gel. Le procédé sol-gel non hydrolytique est un cas particulier de procédé sol-gel, se déroulant en absence d'eau (Vioux, 1997). Un autre cas particulier notable consiste en un procédé sol-gel d'obtention de gels de silice par utilisation de l'acide formique (formation d'eau *in situ*)(Sharp, 1994 ; Dai, 2000).

Les liquides ioniques sont formés par l'association de cations et d'anions et sont à l'état liquide à température proche de la température ambiante. Ils présentent des propriétés remarquables telles qu'une volatilité nulle, une conductibilité ionique élevée ainsi que des propriétés catalytiques. Ils sont utilisés actuellement dans de nombreux domaines, notamment en tant qu'électrolytes (Bonhôte et al., 1996 ; Olivier-Bourbigou et al., 2000 ; Branco et al., 2002 ; Doyle et al., 2000 ; Noda et al., 2000 ; Sun et al., 2001 ; Aurbach et al., 2008 Journal of Power Sources, DOI:10.1016/j.jpowsour.2008.09.099).

La demande internationale WO 2005/007746 décrit des ionogels qui sont des conducteurs ioniques se présentant sous la forme d'un solide monolithique dans lequel est confiné un liquide ionique afin d'associer les propriétés physico-chimiques d'un solide minéral ou organominéral avec celles d'un liquide ionique. Ces ionogels sont fabriqués en une seule étape qui consiste à mélanger en phase homogène une solution, en milieu liquide ionique, un ou plusieurs précurseurs sol-gel (alkoxysilane, alkylalkoxysilane, arylalkoxysilane, halogénosilane, halogénoalkoxysilane, alkoxyde métallique, alkylalkoxyde métallique ou arylalkoxyde métallique, halogénure métallique, etc...), seuls, ou en présence d'une solution aqueuse (acide, basique, saline, etc.), d'un acide carboxylique, ou d'un autre donneur d'oxygène (alcool, éther, etc...).

Bien que ces ionogels présentent de nombreuses propriétés intéressantes, leur utilisation comme électrolytes présente encore des inconvénients dus à leur fort pouvoir de retrait lors de leur préparation, une solidité faible entraînant un court circuit électronique entre les deux électrodes que le ionogel doit séparer, et à une trop forte teneur en eau pour application avec du lithium.

Les batteries solides sont des batteries où les électrodes et l'électrolyte sont solides ; l'électrolyte étant un composé isolant qui sépare électroniquement l'électrode positive de l'électrode négative tout en permettant le passage d'espèces ioniques (ions Li +, Na+ ou Mg 2+) entre les deux. Ces batteries permettent de diminuer les risques de fuites de liquides, de calcination, d'émission de gaz etc. observés avec les batteries utilisant des solutions électrolytiques conventionnelles liquides et par conséquent la sécurité d'utilisation est améliorée. Toutefois du fait de la relativement faible conductivité des électrodes et électrolytes solides, les batteries obtenues sont réalisées en couches minces, et délivrent par conséquent une faible densité d'énergie par unité de surface.

La publication KIM et al. JOURNAL OF POWDER SOURCES, vol. 171 n°2, pages 861-869 décrit des systèmes d'électrolytes sans solvants comportant un polymère et la demande de brevet WO 2008/120162 décrit des sources d'énergie dans lesquelles des électrolytes peuvent être mélangés à des polymères.

Les références suivantes:
- AHMAD ET AL: "Ionogels encompassing ionic liquid with liquid like performance preferable for fast solid state electrochromic devices", ELECTROCHEMISTRY COMMUNICATION, ELSEVIER, AMSTERDAM, NL, vol. 9, no. 7, 15 juin 2007 (2007-06-15), pages 1635-1638, ISSN: 1388-248, et
- SIRISOPANAPORN C ET AL: "New, ionic liquid-based membranes for lithium battery application", JOURNAL OF POWER SOURCES, ELSEVIER, AMSTERDAM, NL, vol. 186, no. 2, 15 janvier 2009 (2009-01-15), pages 490-495, ISSN: 0378-7753,
constituent également des documents de l'art antérieur. Cependant, aucun de ces documents ne décrit des ionogels obtenus par polycondensation in situ d'un précurseur moléculaire inorganique.

Aussi existe-t-il un besoin de disposer de batteries tout solide à haute énergie.

En conséquence les inventeurs ont développé une technologie de batterie Li, (Li-ion ou Li-métal), Na et Mg à haute énergie tout solide à base de ionogels.

Aussi l'invention a-t-elle pour objet un procédé de préparation d'une électrode composite pour des batteries non aqueuses à haute énergie comprenant :
a. une étape de coulage sur une électrode composite, d'un milieu comprenant :
   - au moins un liquide ionique et éventuellement
   - au moins un solvant, ou
   - au moins un polymère ou
   - un mélange d'au moins un solvant et un polymère
      ledit milieu comprenant également au moins un sel de lithium ou de sodium avec
      i. soit au moins un précurseur moléculaire inorganique comportant au moins un groupement hydrolysable, de formule générale :

         R'ₓ(RO)₄-xSi

         dans laquelle :
         - x est un nombre entier variant de 0 à 4,
         - R représente un groupe alkyle de 1 à 4 atomes de carbone, et
         - R' représente :
            * un groupe alkyle comprenant de 1 à 4 atomes de carbone, ou
            * un groupe aryle comprenant de 6 à 30 atomes de carbone, ou
            * un atome d'halogène.
            en l'absence d'un acide et éventuellement en présence d'un catalyseur apte à diminuer le temps de polycondensation choisi parmi les métaux, les complexes métalliques, les oxydes métalliques et les sels métalliques,
      ii. soit au moins un monomère polymérisable,
      iii. soit un mélange des deux,
   ledit milieu étant en excès de manière à imprégner la porosité de l'électrode et à former un film sur la surface de ladite électrode,
b. une étape de polycondensation in situ du au moins un précurseur moléculaire inorganique ou une étape de polymérisation du au moins un monomère polymérisable ou de leur mélange par mise au repos pendant une durée pouvant atteindre plusieurs jours jusqu'à obtention d'un gel contenant en son sein le liquide ionique et le sel de lithium ou de sodium susmentionnés et éventuellement le solvant ou le polymère ou le mélange des deux, ledit gel étant situé à la fois au sein de la porosité de ladite électrode composite et sous forme de couche au contact de ladite électrode composite afin d'obtenir un réseau continu entre l'électrolyte contenu au sein de l'électrode et l'électrolyte ionogel situé au contact de l'électrode, et éventuellement
c. une étape d'élimination de l'eau jusqu'à ce que la teneur en eau du gel conducteur ionique soit inférieure à 50 ppm.

L'étape d'élimination d'eau sera réalisée à ce stade si on veut utiliser une électrode imprégnée d'ionogel pour des capteurs électrochimiques, ou des batteries lithium air avec une électrode négative composite, telle que Li₄Ti₅O₁₂ ou autre.

L'électrode composite de départ mise en oeuvre dans le procédé selon l'invention, peut être n'importe quelle électrode positive ou n'importe quelle électrode négative disponible dans le commerce ou préparée par des techniques connues de l'homme du métier. A titre d'exemple d'électrode positive, on peut citer notamment LiFePO₄ ou LiNi_{1/3}Mn_{1/3}Co_{1/3}O₂ et à titre d'électrode négative on peut citer notamment des électrodes de carbone graphite ou de lithium-métal.

Ainsi conformément à l'invention le procédé est réalisé en une seule étape (« one pot »).

L'expression "ionogel" désigne un squelette solide continu confinant un liquide ionique avec éventuellement un solvant ou un polymère ou un mélange des deux.

L'expression "liquide ionique" désigne l'association de cations et d'anions à l'état liquide à des températures proches de la température ambiante, par exemple liquide à une température comprise entre -20 et +100 °C.

Conformément à l'invention, les sels de lithium, de sodium ou de magénsium qui sont utilisés sont choisis parmi les sels couramment utilisés dans le domaine. A titre d'exemple, le sel de lithium peut être choisi parmi LiPF₆, LiAsF₆, LiClO₄, LiBF₄, LiC₄BO₈, Li(C₂F₅SO₂)₂N, Li[(C₂F₅)₃PF₃], LiCF₃SO₃, LiCH₃SO₃, LiN(SO₂CF₃)₂, et LiN(SO₂F)_{2.}.

Conformément à l'invention, le solvant peut être un solvant liquide comprenant un ou plusieurs composés choisis parmi les carbonates linéaires comme par exemple le carbonate d'éthylène, le carbonate de diméthyle ou le carbonate de diéthyle, ou les carbonates cycliques, les éthers linéaires ou cycliques, les esters linéaires comme l'acétate d'éthyle ou les esters cycliques, les sulfones linéaires ou cycliques, les sulfamides et les nitriles ou un mélange de ceux-ci. Avantageusement le solvant est constitué par au moins deux carbonates choisis parmi le carbonate d'éthylène, le carbonate de propylène, le carbonate de diméthyle, le carbonate de diéthyle et le carbonate de méthyle et d'éthyle.

Les polymères sont ceux classiquement utilisés dans le domaine et connus de l'homme du métier, à savoir des matériaux solides ou semi-solides (gels) qui peuvent supporter et maintenir une structure poreuse dont les pores sont compressibles. Ce peuvent être également des polysaccharides.

Les monomères polymérisables sont également ceux classiquement utilisés dans le domaine et connus de l'homme du métier.

Les proportions dans les mélanges liquide ionique/solvant, liquide ionique polymère, ou liquide ionique /solvant/polymère sont établis par l'homme du métier en fonction du type de composés utilisés et font partie de ces connaissances générales.

L'expression "précurseur moléculaire inorganique" désigne le réactif contenant l'élément ou un des éléments de base dont sera formé le gel ; le précurseur présente le ou les éléments précédents entourés de ligands (appendices ne contenant pas le ou les éléments de base). Il est également appelé "précurseur sol-gel".

L'expression "groupement hydrolysable" désigne un groupement chimique lié à une entité moléculaire et pouvant être séparée de celle-ci par une hydrolyse. Les précurseurs moléculaires utilisés dans le cadre de l'invention soit comprennent au moins 3 groupements hydrolysables ou bien possèdent déjà une dimensionnalité (chaînes polymères plus ou moins ramifiées) pour lesquels 1 ou 2 groupements hydrolysables suffisent pour la formation du gel.

Au sens de la présente invention le catalyseur apte à diminuer le temps de polycondensation peut être choisi parmi tout composé ayant cette propriété, notamment les métaux, les complexes métalliques, en particulier les sels métalliques, et les oxydes métalliques. Avantageusement le catalyseur est le laurate d'étain.

Conformément à l'invention, la concentration en sel de lithium, de sodium ou de magnésium est avantageusement comprise entre 0,1 mol/L et 2 mol/L de liquide ionique ou du mélange liquide ionique/solvant ou du mélange liquide ionique/polymère ou mélange liquide ionique/solvant/polymère.

Selon la présente invention, le liquide ionique, le solvant ou le polymère peuvent être utilisés secs (moins de 50 ppm d'eau) ou bien déjà hydratés (contenant généralement moins de 10% d'eau en masse). Lorsqu'ils sont très secs, ils s'hydratent progressivement pendant la réaction de polycondensation ou de polymérisation.

Dans un mode de réalisation avantageux du procédé selon l'invention, on utilise uniquement un liquide ionique et au moins un sel de lithium ou de sodium avec
i. i. soit au moins un précurseur moléculaire inorganique comportant au moins un groupement hydrolysable de formule générale :

   R'ₓ(RO)₄-xSi

   dans laquelle :
   - x est un nombre entier variant de 0 à 4,
   - R représente un groupe alkyle de 1 à 4 atomes de carbone, et
   - R' représente :
      * un groupe alkyle comprenant de 1 à 4 atomes de carbone, ou
      * un groupe aryle comprenant de 6 à 30 atomes de carbone, ou
      * un atome d'halogène
   en l'absence d'un acide et éventuellement en présence d'un catalyseur apte à diminuer le temps de polycondensation choisi parmi les métaux, les complexes métalliques, les oxydes métalliques et les sels métalliques,
ii. soit au moins un monomère polymérisable,
iii. soit un mélange des deux.

Dans un autre mode de réalisation avantageux du procédé selon l'invention, le sel contenu dans le milieu est un sel de lithium.

Selon un procédé avantageux de la présente invention le liquide ionique est choisi parmi ceux comprenant à titre de cation un noyau imidazolium, pyridinium, pyrrolidinium ou piperidinium, le dit noyau pouvant être substitué sur l'atome d'azote, par un ou deux groupes alkyles de 1 à 8 atomes de carbone et sur les carbones par un ou plusieurs groupes alkyles de 1 à 30 atomes de carbone.

Au sens de la présente invention, on entend par groupe alkyle de 1 à 30 atomes de carbone des chaînes hydrocarbonées saturées ou portant une ou plusieurs doubles liaisons et contenant de 1 à 30 atomes de carbone, avantageusement de 1 à 18 atomes de carbone et plus avantageusement encore de 1 à 8 atomes de carbone ; peuvent être cités à titre d'exemples les groupes méthyle, éthyle, propyle, iso-propyle, n-butyle, isobutyle, sec-butyle, t-butyle, pentyle, isopentyle, 2,2-diméthyl-propyle, hexyle, 2,3-diméthyl-2-butyle, heptyle, 2,2-diméthyl-3-pentyle, 2-méthyl-2-hexyle, octyle, 4-méthyl-3-heptyle, nonyle, décyle, undécyle et dodécyle,

Dans un mode de réalisation avantageux de l'invention, le cation est un noyau pyrrolidinium de formule (I) suivante : 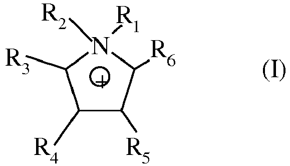 dans laquelle
R₁ et R₂ représentent chacun indépendamment l'un de l'autre un groupe alkyle de 1 à 8 atomes de carbone,
R₃ à R₆, représentent chacun indépendamment l'un de l'autre un atome d'hydrogène ou un groupe alkyle de 1 à 30 atomes de carbone, avantageusement de 1 à 18 atomes de carbone, encore plus avantageusement de 1 à 8 atomes de carbone,
ou un noyau pipéridinium de formule (II) suivante : 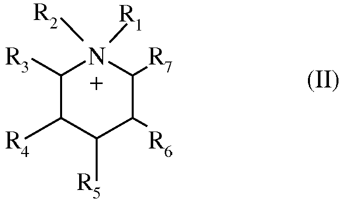
dans laquelle R₁ et R₂ représentent chacun indépendamment l'un de l'autre un groupe alkyle de 1 à 8 atomes de carbone et
R₃ à R₇, représentent chacun indépendamment l'un de l'autre un atome d'hydrogène ou un groupe alkyle de 1 à 30 atomes de carbone, avantageusement de 1 à 18 atomes de carbone, encore plus avantageusement de 1 à 8 atomes de carbone,

Dans un mode de réalisation particulièrement avantageux, le cation est choisi parmi 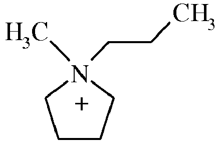 et

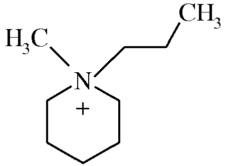

Selon un procédé avantageux de la présente invention le liquide ionique est choisi parmi ceux comprenant à titre d'anion ceux choisis parmi les halogénures, les anions perfluorés et les borates.

Les anions halogénures sont notamment choisis parmi les anions suivants : chlorure, bromure, fluorure ou iodure.

Dans un mode de réalisation particulièrement avantageux de l'invention, l'anion est choisi parmi :
- le bis(trifluorométhylsulfonyl)imide de formule : 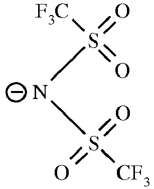
- l'hexafluorophosphate de formule PF₆⁻
- le tétrafluoroborate, de formule BF₄⁻ et
- l'oxaloborate de formule

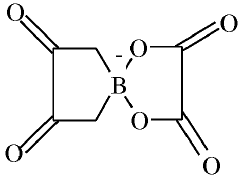

On entend par dérivés des éléments des périodes 3, 4 et 5 du tableau de Mendeleïev notamment le silicium et autres organo-métalliques, notamment ceux à base de titane, de zinc, de zirconium, d'argent, d'étain ou d'aluminium, comme par exemple TiCl₄, Ti(OCH(CH₃)₂)₄, Al(OCH(CH₃)₂)₃ Si(OCH₃)₄, SnCl₄.

Dans un mode de réalisation particulièrement avantageux de l'invention, le précurseur moléculaire inorganique est un composé de formule générale :

R'ₓ(RO)₄₋ₓSi

dans laquelle :
- x est un nombre entier variant de 0 à 4,
- R représente un groupe alkyle de 1 à 4 atomes de carbone, et
- R' représente :
   * un groupe alkyle comprenant de 1 à 4 atomes de carbone, ou
   * un groupe aryle comprenant de 6 à 30 atomes de carbone, ou
   * un atome d'halogène,
ledit composé étant notamment le tétraméthoxysilane ou le méthyltriméthoxysilane ou un mélange de ces composés.

Au sens de la présente invention, on entend par aryle comprenant 6 à 30 atomes de carbone, un mono ou multicycle aromatique comprenant de 6 à 30 atomes de carbone, notamment les groupes phényle, tolyle, xylyle, naphtyle, anthryle, et phénantryle.

Dans un mode de réalisation particulièrement avantageux de l'invention, le rapport molaire liquide ionique/précurseur moléculaire inorganique ou solvant /précurseur moléculaire inorganique ou polymère/précurseur moléculaire inorganique ou mélange solvant/liquide ionique)/précurseur moléculaire inorganique ou mélange polymère solvant /précurseur moléculaire inorganique ou mélange liquide ionique polymère/précurseur moléculaire inorganique ou mélange liquide ionique solvant polymère/précurseur moléculaire inorganique dans le milieu est compris entre 0,25 et 1. Le choix de ce rapport moléculaire permet d'obtenir un composé présentant de bonnes caractéristiques mécaniques (non friable, manipulable).

Dans un mode de réalisation avantageux de l'invention, le mélange est laissé au repos pendant 2 à 9 jours sous atmosphère et température ambiantes.

Conformément à l'invention, l'étape c) d'élimination de l'eau peut réalisée par toute technique connue de l'homme du métier, notamment par mise à l'étuve, sous vide, à une température comprise entre 50 et 100 °C pendant une durée comprise entre 1 h et 5 jours.

Le procédé comprenant les étapes suivantes :
a. une étape de coulage d'un milieu comprenant :
   - au moins un liquide ionique et éventuellement,
   - au moins un solvant, ou
   - au moins un polymère ou
   - un mélange des deux
   ledit milieu comprenant également au moins un sel de lithium, de sodium ou de magnésium avec
   i. soit au moins un précurseur moléculaire inorganique comportant au moins un groupement hydrolysable, en l'absence d'un acide et éventuellement en présence catalyseur apte à diminuer le temps de polycondensation,
   ii. soit au moins un monomère polymérisable,
   iii. soit un mélange des deux,
b. mise au repos du mélange obtenu à l'étape a) pendant une durée pouvant atteindre plusieurs jours jusqu'à obtention d'un gel contenant en son sein le liquide ionique et le sel de lithium, de sodium ou de magnésium susmentionnés et éventuellement le solvant ou le polymère ou le mélange des deux et susceptible d'être mis en forme, notamment sous forme de solide monolithique transparent,
c. une étape d'élimination de l'eau jusqu'à ce que la teneur en eau du gel conducteur ionique soit inférieur à 50 ppm.
permet la préparation d'un gel conducteur ionique sous forme solide, encore désigné "ionogel".

Les ionogels ainsi obtenus présentent les caractéristiques suivantes :
- ce sont des films continus,
- ils sont stables jusqu'à des températures d'environ 250°C, en particulier jusqu'à environ à 100°C,
- ils sont transparents,
- ce sont des conducteurs ioniques, leur conductivité ionique étant notamment comprise entre environ 10⁻⁴ et 10⁻³ S.cm⁻¹ à température ambiante et entre 10⁻² et 10⁻¹ à 230°C,
- ils sont isolants électroniques et
- ils présentent un retrait inférieur à 20 % en volume après l'élimination de l'eau. Ils sont aussi caractérisés par la présence d'un réseau iono-covalent continu.

Les ionogels tels qu'obtenus par mise en oeuvre du procédé décrit précédemment, comprennent un liquide ionique et éventuellement un solvant ou un polymère ou un mélange de solvant et de polymère et un sel de lithium, ou de sodium ou de magnésium tels que définis précédemment confinés au sein d'un réseau solide continu formé à partir d'au moins un précurseur moléculaire inorganique tel que défini précédemment.

L'expression "film continu" désigne un squelette solide s'étendant dans tout le matériau sans interruption dont au moins l'une des dimensions est de 1 à 100 µm.

L'expression "confiné" signifie que le liquide ionique ou le solvant ou le polymère ou leurs mélanges reste contenu dans le matériau, qu'il n'en coule pas et ne s'en évapore pas.

Du fait de leur transparence, de leur conductivité ionique et de leur pouvoir isolant, les ionogels selon l'invention peuvent trouver de nombreuses applications. Comme application basée sur la transparence on peut citer à titre d'exemple l'incorporation d'indicateurs colorés, ou leur utilisation dans des systèmes électrochromes, par exemple pour l'affichage. Comme applications basées sur la conductivité ionique on peut citer à titre d'exemple l'utilisation dans le cadre de la préparation d'accumulateurs électrochimiques et de cellules photovoltaïques qui nécessitent des membranes conductrices ioniques performantes à des températures de l'ordre de 100°C.

Un des avantages de l'invention réside dans le fait que celle-ci permet de disposer de conducteurs ioniques solides, pouvant être mis sous forme de films minces, stables et performants jusqu'à des températures au moins de l'ordre de 100°C.

Ils sont particulièrement utiles pour la construction de batteries tout solide haute énergie.

La présente invention a également pour objet une électrode composite telle qu'obtenue par le procédé selon l'invention.

Accumulateur ou batterie tout solide lithium, sodium ou magnésium à jonction électrode-électrolyte continue comprenant soit une électrode négative, soit une électrode positive, soit les deux électrodes préparées selon l'invention.

L'accumulateur ou batterie selon l'invention peut être préparé par toute technique connu de l'homme du métier par assemblage de deux électrodes selon l'invention ou par celui d'une électrode positive selon l'invention avec une électrode négative classique ou par celui d'une électrode négative selon l'invention avec une électrode positive classique. Dans tous les cas on obtient un accumulateur ou une batterie tout solide dans lequel le ionogel joue le rôle de séparateur entre les deux électrodes et d'électrolyte.

Les accumulateurs ou batteries selon l'invention peuvent être utilisés dans toutes les applications classiques des batteries notamment celle des batteries lithium, en particulier dans des appareils électroniques portables comme par exemple les téléphones cellulaires, les ordinateurs portables, les ordinateurs et les caméscopes.

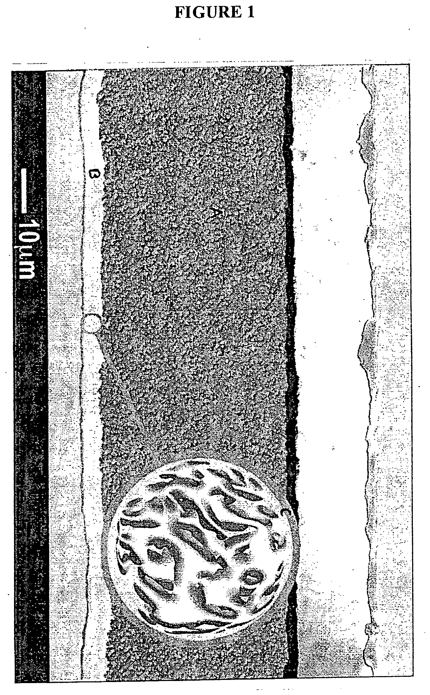

Les exemples 1 à 3 et les figures 1 à 5 qui suivent, illustrent l'invention.
La figure 1 représente une électrode selon l'invention susceptible d'être obtenue par le procédé selon l'invention à partir d'un liquide ionique et de sel de lithium. La zone A correspond à l'électrode dont les pores sont remplis de ionogel (apparaissant sous forme de grains plus claires). La zone B correspond au ionogel déposé à la surface de l'électrode et qui jouera le rôle de séparateur et d'électrolyte lors de l'assemblage avec une autre électrode pour faire un accumulateur et C illustre la structure du ionogel comprenant le milieu liquide ionique/sel de lithium confiné dans une structure rigide.
La figure 2 représente l'état antérieur de la technique et montre la capacité spécifique obtenue lorsque l'interface électrode positive (Li₁Ni_{1/3}Mn_{1/3}Co_{1/3}O₂) / Electrolyte solide (Ionogel) n'est pas continue.
La figure 3 montre la capacité obtenue lorsque l'interface électrode positive (Li₁Ni_{1/3}Mn_{1/3}Co_{1/3}O₂) / électrolyte solide (ionogel) est optimisée conformément à l'invention (exemple 2) en présence d'un rapport molaire liquide ionique sur silicium variable (- - -) : rapport molaire = 0,25 , (------) : rapport molaire = 0,5 et (-) : rapport molaire =1.
La figure 4 montre la réversibilité de la réaction de charge/ décharge (extraction / insertion d'ions Li⁺) de l'électrode positive. ● décharge ; ▲ charge.
La figure 5 illustre l'absence d'influence néfaste du grammage sur les performances électrochimiques d'une électrode préparée selon l'exemple 2 (------) : grammage = 2 mg.cm⁻² ; (-) : grammage = 4 2 mg.cm⁻²

### EXEMPLE selon l'art antérieur: Electrode composite sur laquelle on vient déposer un ionogel synthétisé séparément

### 1.1. Mode opératoire

### 1.1.1. Synthèse générale des ionogels

a) Un électrolyte est synthétisé à l'aide d'un mélange du liquide ionique 1-méthyl-1-propylpyrrolidinium bis(trifluorométhylsulfonyl)imide (Py13-TFSI) ou du liquide ionique 1-Methyl-1-propylpiperidinium bis(trifluorométhylsulfonyl)imide (PP13-TFSI) et du sel de lithium (LiTFSI). La concentration en LiTFSI est fixée entre 0,1 et 2 mol.L⁻¹. On appelle ce mélange la solution 1.
b) Un mélange d'un volume de tétraméthoxysilane (TMOS) avec un volume de méthyltriméthoxysilane (MTMS) est réalisé. On appelle ce mélange la solution 2.
c) Synthèse du sol : l'électrolyte (solution 1) est mélangé avec le précurseur de silice (solution 2) suivant les proportions massiques données dans le tableau 1 et le tableau 2 ci-dessous.

**Tableau 1 : Proportions massiques utilisées pour la synthèse de ionogels Py13-TFSI-LiTFSI (Py13-TFSI + 0,5 mol/L LiTFSI)**

| Rapport molaire | Masse Electrolyte (g) | Masse TMOS-MTMS (g) |
|---|---|---|
| 0,25 | 1,000 | 1,286 |
| 0,5 | 1,000 | 0,643 |
| 1 | 1,000 | 0,322 |

**Tableau 2 : Proportions massiques utilisées pour la synthèse de ionogels PP13-TFSI-LiTFSI (PP13-TFSI + 0,5 mol/L LiTFSI)**

| Rapport molaire | Masse Electrolyte (g) | Masse TMOS-MTMS (g) |
|---|---|---|
| 0,25 | 1,000 | 1,243 |
| 0,5 | 1,000 | 0,622 |
| 1 | 1,000 | 0,311 |

### 1.1.2. Préparation de l'électrode

Elle est préparée selon les techniques connues de l'état antérieur de la technique par simple dépôt du ionogel sur une électrode.

### 1.2. Résultats

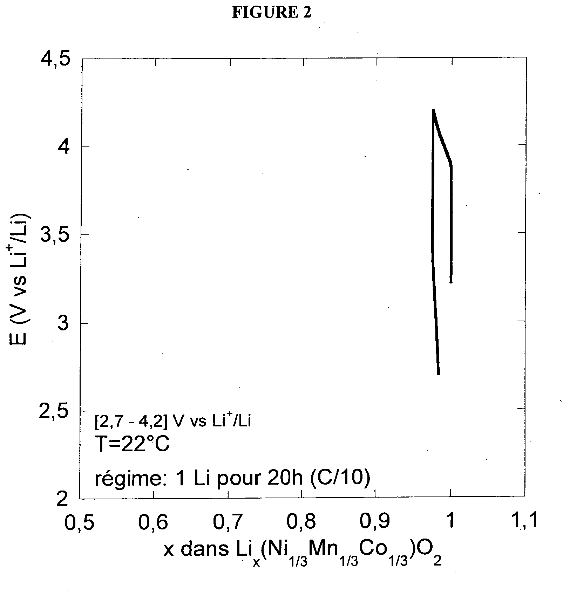

Ils sont donnés dans la figure 2.

Dans ce cas, l'interface électrode positive (Li₁Ni_{1/3}Mn_{1/3}Co_{1/3}O₂) / Electrolyte solide (Ionogel) n'est pas continue. Par conséquent, la capacité spécifique obtenue est extrêmement faible (quelques mAh.g⁻¹) et invalide le dispositif.

La faible capacité spécifique obtenue (environ 1% de la capacité spécifique obtenue avec un électrolyte de type liquide ionique Py13-TFSI+0,35 mol/kg LiTFSI) est probablement due aux grains de surface de l'électrode composite, qui sont les seuls en contact direct avec l'électrolyte solide.

### EXEMPLE 1 : Electrode préparée selon l'invention

### 1.1. Mode opératoire

On utilise un électrolyte préalablement synthétisé à partir d'un mélange de 8,0709 g de Py13-TFSI et de 0,8119 g de LiTFSI, soit un électrolyte de type Py13-TFSI + 0,35 mol/kg LiTFSI (soit environ 0,5 mol/L).

On utilise 0,4645 g de cet électrolyte, que l'on mélange avec 0,2948 g du mélange TMOS-MTMS dans un pilulier en verre. On obtient donc un sol avec un rapport molaire liquide ionique sur silicium de 0,5. On mélange à l'aide d'un barreau aimanté pendant 1 heure.

On prélève ensuite 200 µL de ce mélange, que l'on verse sur l'électrode composite (poreuse) de type Li₁Ni_{1/3}Mn_{1/3}Co_{1/3}O₂. Le reste du ionogel est laissé dans le pilulier en verre, afin de connaître le temps de gélification. Dans ce cas, le temps de gélification est de 30 heures.

Après 30 heures, l'électrode composite gélifiée est introduite dans une étuve à T=100°C sous vide pendant 24 heures.

L'électrode composite ainsi « ionogélisée », avec interface (ou jonction) électrode positive (Li₁Ni_{1/3}Mn_{1/3}Co_{1/3}O₂) / électrolyte solide (ionogel) continue peut ensuite être utilisée dans un accumulateur au lithium. Ainsi, on ajoute une contre-électrode de lithium métal par pression (de l'ordre de 1 kg/cm²), au dessus l'électrolyte solide (ionogel).

### 1.2. Résultats

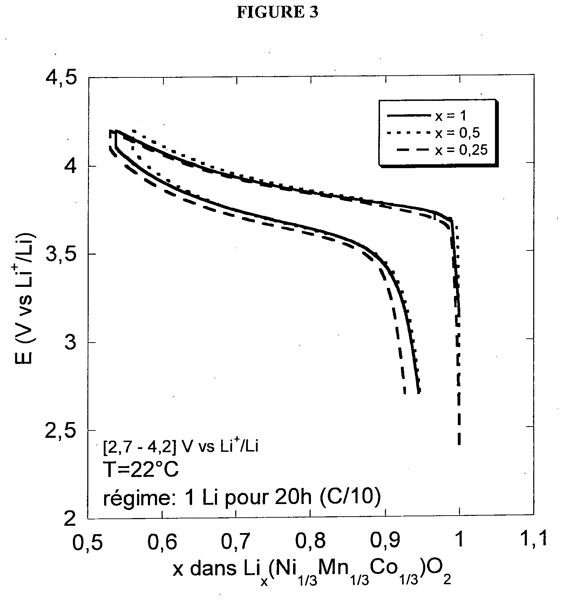

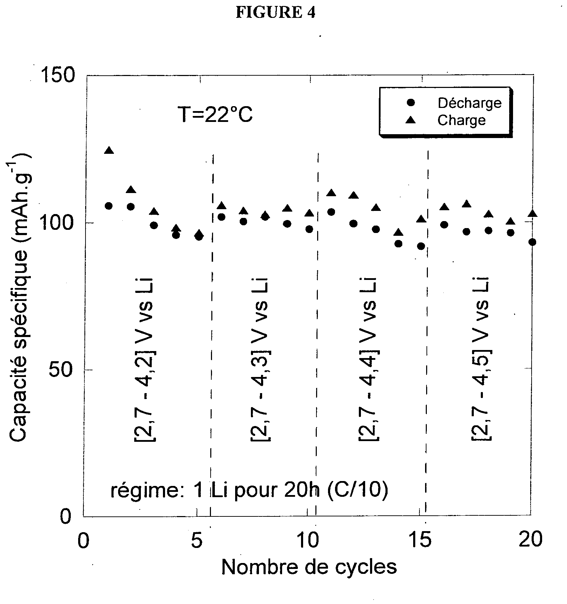

Ils sont donnés dans les figures 3 et 4

Lorsque l'interface électrode positive (Li1Ni1/3Mn1/3Co1/3O2) / électrolyte solide (ionogel) est optimisée, les performances électrochimiques obtenues sont identiques aux capacités obtenues pour une demi-pile Li₁Ni_{1/3}Mn_{1/3}Co_{1/3}O₂ / liquide ionique (Py13-TFSI+0,35 mol/kg LiTFSI) / Li. C'est-à-dire une capacité spécifique de 110 mAh.g-1 à un régime de charge / décharge de un ion Li+ extrait / inséré en 20 heures. La polarisation est identique en électrolyte tout solide et en électrolyte liquide ionique. De plus, le rapport molaire liquide ionique sur silicium n'influence pas les performances électrochimiques (voir figure 3). Dans cet exemple, la contre-électrode est une électrode de lithium métallique. L'interface Li métal / électrolyte est assurée par une pression (de l'ordre de 1 kg/cm²) entre l'électrode de Li métal et l'électrolyte solide.

La réaction de charge/ décharge (extraction / insertion d'ions Li+) de l'électrode positive est réversible, comme le montre la figure 4. On peut voir que le cyclage reste possible jusqu'à un potentiel atteignant 4,5 V vs Li+/Li.

Aucune nouvelle étape électrochimique de réduction ou d'oxydation n'est décelée dans les courbes galvanostatiques (non présentées ici), ce qui montre que l'électrolyte est stable électrochimiquement jusqu'à 4,5 V vs Li⁺/Li.

### EXEMPLE 2: Mesure de l'influence du grammage sur les performances électrochimiques

### 3.1. Mode opératoire

L'accumulateur Li₁Ni_{1/3}Mn_{1/3}Co_{1/3}O₂/ électrolyte solide (ionogel) / Li préparé à l'exemple 2 est introduit dans une cellule électrochimique étanche de type Swagelok®. Cette étape est réalisée en boîte à gants, dans laquelle les taux d'humidité et d'oxygène sont inférieurs à 5 ppm. Les expériences de charge - décharge sont réalisées à l'aide d'un potentiostat / galvanostat multivoies VMP (Bio-Logic) relié à un ordinateur et piloté par le logiciel EC-Lab (Bio-Logic).

Les expériences de charge - décharge des accumulateurs sont réalisées à courant constant. Le courant est calculé et fixé par l'utilisateur afin qu'une mole d'ions lithium soit insérée (ou extraite) en un temps fixé par l'utilisateur (généralement 20 heures). Ce temps défini le régime de charge - décharge de l'accumulateur. Les cyclages sont réalisés dans une fenêtre de potentiel comprise entre 2,7 V et 4,5 V vs Li⁺/Li. La température de cyclage est fixée par l'utilisateur, en plaçant la cellule Swagelok® dans une étuve réglable.

### 3.2 Résultats

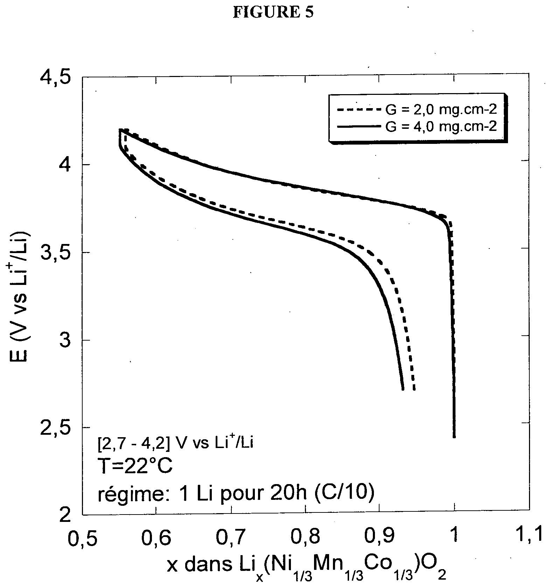

Ils sont illustrés dans la figure 5.

Le grammage de l'électrode composite (ce qui correspond à la quantité massique de matière active par unité de surface) n'influence pas les performances électrochimiques obtenues avec un électrolyte solide ionogel.

Ainsi avec la technologie ionogel, il est possible d'utiliser des électrodes composites déjà développées dans le commerce, sans en changer la composition. De même, un gros inconvénient des batteries tout-solide développées actuellement est leur faible grammage : l'électrode composite contient seulement 40% massique (au maximum) de matière active. Or, dans le cas d'électrolytes ionogel, la porosité de l'électrode composite commerciale est complètement mouillée par le ionogel : ainsi, on conserve 90% massique de matière active dans l'électrode composite, et les performances électrochimiques obtenues sont identiques à celles obtenues avec un électrolyte de type liquide ionique.

## Revendications

1. Procédé de préparation d'une électrode composite pour des batteries non aqueuses à haute énergie comprenant :
a. une étape de coulage sur une électrode composite, d'un milieu comprenant :
- au moins un liquide ionique et éventuellement
- au moins un solvant, ou
- au moins un polymère ou
- un mélange d'au moins un solvant et un polymère
ledit milieu comprenant également au moins un sel de lithium ou de sodium avec
i. soit au moins un précurseur moléculaire inorganique comportant au moins un groupement hydrolysable, de formule générale :
R'ₓ(RO)₄₋ₓSi
dans laquelle :
- x est un nombre entier variant de 0 à 4,
- R représente un groupe alkyle de 1 à 4 atomes de carbone, et
- R' représente :
* un groupe alkyle comprenant de 1 à 4 atomes de carbone, ou
* un groupe aryle comprenant de 6 à 30 atomes de carbone, ou
* un atome d'halogène
en l'absence d'un acide et éventuellement en présence d'un catalyseur apte à diminuer le temps de polycondensation choisi parmi les métaux, les complexes métalliques, les oxydes métalliques et les sels métalliques,
ii. soit au moins un monomère polymérisable,
iii. soit un mélange des deux,
ledit milieu étant en excès de manière à imprégner la porosité de l'électrode et à former un film sur la surface de ladite électrode,
b. une étape de polycondensation in situ du au moins un précurseur moléculaire inorganique ou une étape de polymérisation du au moins un monomère polymérisable ou de leur mélange par mise au repos pendant une durée pouvant atteindre plusieurs jours jusqu'à obtention d'un gel contenant en son sein le liquide ionique et le sel de lithium ou de sodium susmentionnés et éventuellement le solvant ou le polymère ou le mélange des deux, ledit gel étant situé à la fois au sein de la porosité de ladite électrode composite et sous forme de couche au contact de ladite électrode composite afin d'obtenir un réseau continu entre l'électrolyte contenu au sein de l'électrode et l'électrolyte ionogel situé au contact de l'électrode, et éventuellement
c. une étape d'élimination de l'eau jusqu'à ce que la teneur en eau du gel conducteur ionique soit inférieure à 50 ppm.

2. Procédé selon la revendication 1 **caractérisé en ce que** le milieu comprend uniquement un liquide ionique et au moins un sel de lithium ou de sodium avec
i. i. soit au moins un précurseur moléculaire inorganique comportant au moins un groupement hydrolysable de formule générale :
R'ₓ(RO)₄₋ₓSi
dans laquelle :
- x est un nombre entier variant de 0 à 4,
- R représente un groupe alkyle de 1 à 4 atomes de carbone, et
- R' représente :
* un groupe alkyle comprenant de 1 à 4 atomes de carbone, ou
* un groupe aryle comprenant de 6 à 30 atomes de carbone, ou
* un atome d'halogène
en l'absence d'un acide et éventuellement en présence d'un catalyseur apte à diminuer le temps de polycondensation choisi parmi les métaux, les complexes métalliques, les oxydes métalliques et les sels métalliques,
ii. soit au moins un monomère polymérisable,
iii. soit un mélange des deux.

3. Procédé selon l'une quelconque des revendications 1 ou 2 **caractérisé en ce que** le sel contenu dans le milieu est un sel de lithium.

4. Procédé selon l'une quelconque des revendications précédentes **caractérisé en ce que** le liquide ionique est choisi parmi ceux comprenant à titre de cation un noyau imidazolium, pyridinium, pyrrolidinium ou piperidinium, le dit noyau pouvant être substitué sur l'atome d'azote par un ou deux groupes alkyles de 1 à 8 atomes de carbone et sur les carbones par un ou plusieurs groupes alkyles de 1 à 30 atomes de carbone.

5. Procédé selon la revendication 4 **caractérisé en ce que** le liquide ionique est choisi parmi ceux comprenant à titre d'anion ceux choisis parmi les halogénures, les anions perfluorés et les borates.

6. Procédé selon la revendication 1 **caractérisé en ce que** R' représente un groupe aryle comprenant de 6 à 10 atomes de carbone.

7. Procédé selon l'une quelconques des revendications précédentes dans lequel le catalyseur est le laurate d'étain.

8. Electrode composite telle qu'obtenue par le procédé selon l'une quelconque des revendications précédentes.

9. Accumulateur ou batterie tout solide lithium, sodium ou magnésium à jonction électrode-électrolyte continue comprenant soit une électrode négative, soit une électrode positive, soit les deux électrodes selon la revendication 8.

## Patentansprüche

1. Verfahren zur Herstellung einer Verbundelektrode für nicht-wässerige Batterien mit hoher Energie, das umfasst:
a. einen Schritt zum Gießen eines Mediums auf eine Verbundelektrode, das umfasst:
- mindestens eine ionische Flüssigkeit und eventuell
- mindestens ein Lösungsmittel oder
- mindestens ein Polymer oder
- ein Gemisch von mindestens einem Lösungsmittel und einem Polymer,
wobei das Medium auch mindestens ein Lithium- oder Natriumsalz umfasst mit
i. entweder mindestens einer anorganischen Molekülvorstufe mit mindestens einer hydrolysierbaren Gruppe mit der allgemeinen Formel:
R'ₓ(RO)₄₋ₓSi
in der:
- x eine ganze Zahl ist, die von 0 bis 4 variiert,
- R eine Alkylgruppe mit 1 bis 4 Kohlenstoffatomen darstellt, und
- R' darstellt:
* eine Alkylgruppe mit 1 bis 4 Kohlenstoffatomen oder
* eine Arylgruppe mit 6 bis 30 Kohlenstoffatomen oder
* ein Halogenatom,
in Abwesenheit einer Säure und eventuell in Gegenwart eines Katalysators, der die Polykondensationszeit verringern kann, der aus den Metallen, den Metallkomplexen, den Metalloxiden und den Metallsalzen ausgewählt ist,
ii. oder mindestens einem polymerisierbaren Monomer,
iii. oder einem Gemisch der beiden,
wobei das Medium im Überschuss vorliegt, um die Porosität der Elektrode zu imprägnieren und einen Film auf der Oberfläche der Elektrode zu bilden,
b. einen Schritt zur In-situ-Polykondensation der mindestens einen anorganischen Molekülvorstufe oder einen Schritt zur Polymerisation des mindestens einen polymerisierbaren Monomers oder ihres Gemisches durch Stehenlassen während einer Dauer, die mehrere Tage erreichen kann, bis zum Erhalten eines Gels, das in seinem Inneren die vorstehend erwähnte ionische Flüssigkeit und das vorstehend erwähnte Lithium- oder Natriumsalz und eventuell das Lösungsmittel oder das Polymer oder das Gemisch der beiden enthält, wobei sich das Gel sowohl im Inneren der Porosität der Verbundelektrode als auch in Form einer Schicht in Kontakt mit der Verbundelektrode befindet, um ein kontinuierliches Netz zwischen dem Elektrolyten, der im Inneren der Elektrode enthalten ist, und dem Ionengelelektrolyten, der mit der Elektrode in Kontakt steht, zu erhalten, und eventuell
c. einen Schritt zur Beseitigung des Wassers, bis der Wassergehalt des Ionenleitergels geringer ist als 50 ppm.

2. Verfahren nach Anspruch 1, **dadurch gekennzeichnet, dass** das Medium nur eine ionische Flüssigkeit und mindestens ein Lithium- oder Natriumsalz umfasst mit
i. entweder mindestens einer anorganischen Molekülvorstufe mit mindestens einer hydrolysierbaren Gruppe mit der allgemeinen Formel:
R'ₓ(RO)₄₋ₓSi
in der:
- x eine ganze Zahl ist, die von 0 bis 4 variiert,
- R eine Alkylgruppe mit 1 bis 4 Kohlenstoffatomen darstellt, und
- R' darstellt:
* eine Alkylgruppe mit 1 bis 4 Kohlenstoffatomen oder
* eine Arylgruppe mit 6 bis 30 Kohlenstoffatomen oder
* ein Halogenatom,
in Abwesenheit einer Säure und eventuell in Gegenwart eines Katalysators, der die Polykondensationszeit verringern kann, der aus den Metallen, den Metallkomplexen, den Metalloxiden und den Metallsalzen ausgewählt ist,
ii. oder mindestens einem polymerisierbaren Monomer,
iii. oder einem Gemisch der beiden.

3. Verfahren nach einem der Ansprüche 1 oder 2, **dadurch gekennzeichnet, dass** das im Medium enthaltene Salz ein Lithiumsalz ist.

4. Verfahren nach einem der vorangehenden Ansprüche, **dadurch gekennzeichnet, dass** die ionische Flüssigkeit aus jenen ausgewählt ist, die als Kation einen Imidazolium-, Pyridinium-, Pyrrolidinium- oder Piperidiniumkern umfassen, wobei der Kern am Stickstoffatom mit ein oder zwei Alkylgruppen mit 1 bis 8 Kohlenstoffatomen und an den Kohlenstoffen mit einer oder mehreren Alkylgruppen mit 1 bis 30 Kohlenstoffatomen substituiert sein kann.

5. Verfahren nach Anspruch 4, **dadurch gekennzeichnet, dass** die ionische Flüssigkeit aus jenen ausgewählt ist, die als Anion jene umfassen, die aus den Halogeniden, den perfluorierten Anionen und den Boraten ausgewählt sind.

6. Verfahren nach Anspruch 1, **dadurch gekennzeichnet, dass** R' eine Arylgruppe mit 6 bis 10 Kohlenstoffatomen darstellt.

7. Verfahren nach einem der vorangehenden Ansprüche, bei dem der Katalysator Zinnlaurat ist.

8. Verbundelektrode, wie durch das Verfahren nach einem der vorangehenden Ansprüche erhalten.

9. Ganz massiver Lithium-, Natrium- oder Magnesium-Akkumulator oder ganz massive Lithium-, Natrium- oder Magnesium-Batterie mit kontinuierlichem Elektroden-Elektrolyt-Übergang mit entweder einer negativen Elektrode oder einer positiven Elektrode oder den beiden Elektroden nach Anspruch 8.

## Claims

1. Method of preparing a composite electrode for non-aqueous, high-energy batteries comprising:
a. a step of pouring, on a composite electrode, a medium comprising:
- at least one ionic liquid and possibly
- at least one solvent, or
- at least one polymer, or
- a mixture of at least one solvent and one polymer
said medium likewise comprising at least one lithium or sodium salt having
i. either at least one inorganic molecular precursor comprising at least one hydrolysable group of the general formula:
R'ₓ(RO)₄₋ₓSi
in which:
- x is a whole number varying from 0 to 4,
- R represents an alkyl group with 1 to 4 carbon atoms, and
- R' represents:
* an alkyl group comprising from 1 to 4 carbon atoms, or
* an aryl group comprising from 6 to 30 carbon atoms, or
* a halogen atom
in the absence of an acid and possibly in the presence of a catalyst which is able to reduce the polycondensation time, chosen from metals, metallic complexes, metallic oxides and metallic salts,
ii. or at least one polymerisable monomer,
iii. or a mixture of both,
said medium being in excess so as to impregnate the porosity of the electrode and to form a film on the surface of said electrode,
b. a polycondensation step in situ of the at least one inorganic molecular precursor or a polymerisation step of the at least one polymerisable monomer or of the mixture thereof by leaving to rest for a duration which can stretch to several days until a gel is obtained, containing within it the ionic liquid and the aforementioned lithium or sodium salt and possibly the solvent or the polymer or the mixture of both, said gel being situated both within the porosity of said composite electrode and in the form of a layer in contact with said composite electrode, in order to obtain a continuous network between the electrolyte contained within the electrode and the ionogel electrolyte situated in contact with the electrode, and possibly
c. a step of eliminating the water until the water content of the ionic conductive gel is less than 50 ppm.

2. Method according to claim 1, **characterised in that** the medium comprises solely one ionic liquid and at least one lithium or sodium salt having
i. either at least one inorganic molecular precursor comprising at least one hydrolysable group of the general formula:
R'ₓ(RO)₄₋ₓSi
in which:
- x is a whole number varying from 0 to 4,
- R represents an alkyl group with 1 to 4 carbon atoms, and
- R' represents:
* an alkyl group comprising from 1 to 4 carbon atoms, or
* an aryl group comprising from 6 to 30 carbon atoms, or
* a halogen atom
in the absence of an acid and possibly in the presence of a catalyst which is able to reduce the polycondensation time, chosen from metals, metallic complexes, metallic oxides and metallic salts,
ii. or at least one polymerisable monomer,
iii. or a mixture of both.

3. Method according to any of the claims 1 or 2, **characterised in that** the salt contained in the medium is a lithium salt.

4. Method according to any of the preceding claims, **characterised in that** the ionic liquid is chosen from those comprising, by way of cation, an imidazolium, pyridinium, pyrrolidinium or piperidinium core, said core being able to be substituted on the nitrogen atom by one or two alkyl groups with 1 to 8 carbon atoms and on the carbons by one or more alkyl groups with 1 to 30 carbon atoms.

5. Method according to claim 4, **characterised in that** the ionic liquid is chosen from those comprising, by way of anion, those chosen from halogenides, perfluorinated anions and borates.

6. Method according to claim 1, **characterised in that** R' represents an aryl group comprising from 6 to 10 carbon atoms.

7. Method according to any of the preceding claims in which the catalyst is tin laurate.

8. Composite electrode as obtained by the method according to any of the preceding claims.

9. Completely solid, lithium, sodium or magnesium accumulator or battery, with a continuous electrode-electrolyte junction comprising either a negative electrode or a positive electrode or the two electrodes according to claim 8.
